# EUROPEAN PATENT SPECIFICATION

(11) **EP 0 453 421 B1**
(45) Date of publication and mention of the grant of the patent: **27.07.1994**
(21) Application number: 91850048.9
(22) Date of filing: 27.02.1991
(51) Int. Cl.: F16C 33/78

(54) **Rolling bearing**
Wälzlager
Roulement

(30) Priority: 18.04.1990 SE 9001373
(43) Date of publication of application: 23.10.1991
(73) Proprietor: Aktiebolaget SKF, S-415 50 Göteborg (SE)
(72) Inventor: Engström, Bengt, S-435 43 Mölnlycke (SE); Grafström, Gunnar, S-448 00 Floda (SE)
(74) Representative: Forsberg, Lars-Ake

(56) References cited:
- DE-U- 8 018 794
- FR-A- 2 032 689
- GB-A- 693 222
- US-A- 3 858 950

## Description

The present invention refers to sealed spherical rolling bearings comprising both ball bearings and roller bearings.

Spherical bearings in general are not sealed, since they mostly are mounted in some form of a bearing housing, whereby its sufficient that the passage of the shaft through the housing wall is sealed. However, sealed spherical bearings are commonly known. A problem with sealing of spherical bearings is that the sealing action of the sealings are affected by the tilting of the bearing. The sealing on one side can be pressed harder against a contact surface while the sealing on the other side might have a too loose contact depending on the degree of tilt. That a seal is pressed too hard against a corresponding contact surface naturally does not degrade the sealing action in itself, but an unnecessary high and not desirable friction occurs. The contact becoming too loose naturally degrades the sealing action itself. Special designs of the sealings for spherical bearings therefore have been developed, which withstand tilting of the bearing without increased friction or degraded sealing action.

The sealings in spherical bearings in general are mounted to the outer ring, either in a groove on the side surface of the outer ring or in a groove at the inner surface of the outer ring beside the spherical running path. If the groove is positioned on the side surface of the outer ring, the seal will mostly lie outside the bearing and a problem will arise when the bearing is mounted, since the side wall is occupied by the seal. At the mounting of the bearing one has to consider that there has to be a space for the seal on the outside of the bearing. This is however not a greater problem.

When there is no space to let the seal be mounted outside the bearing, this has to be placed as related above, in a groove in eg. the outer ring. The bearing rings however will be much broader than what should be needed for the sake of carrying capacity, since there has to be space inside the bearing beside the roller elements for the sealings.

By the present invention the problems have been solved with previously known sealed spherical rolling bearings. According to the invention as defined in claim 1 there is provided such a bearing comprising an outer ring with spherical running path, inner ring and between the rings situated roller elements and seals on one or both sides characterized in that the seal(s) are designed with a rim which is snapped in to the spherical running path and clamped in the outer ring by means of this rim and a portion which clamps against the side plane of the outer ring.

According to a preffered embodiment of the invention it is suitable to make the seal in one piece of plastic, rubber or sheet metal which at its radial inner rim can be bent inwards against the bearing and there form a labyrinth seal against a surface on the inner ring.

According to another preferred embodiment of the invention the seal also can be made in plastic or sheet metal at the radially outer part and let the radially inner part consist of a lip of rubber or similar soft material, which is intended to contact a surface on the inner ring.

According to a further embodiment of the invention the seal can extend only partly towards the inner ring, on which a lip of soft material is mounted, which contacts the outside of the seal.

The invention will be described in greater detail in the following with reference to the figures, where
Fig. 1 in section shows a sealed double row spherical ball bearing of conventional type and where the
Figures 2, 3, 4, 5, 6, 7, 8 and 9 show different embodiments of sealed spherical bearings according to the present invention.

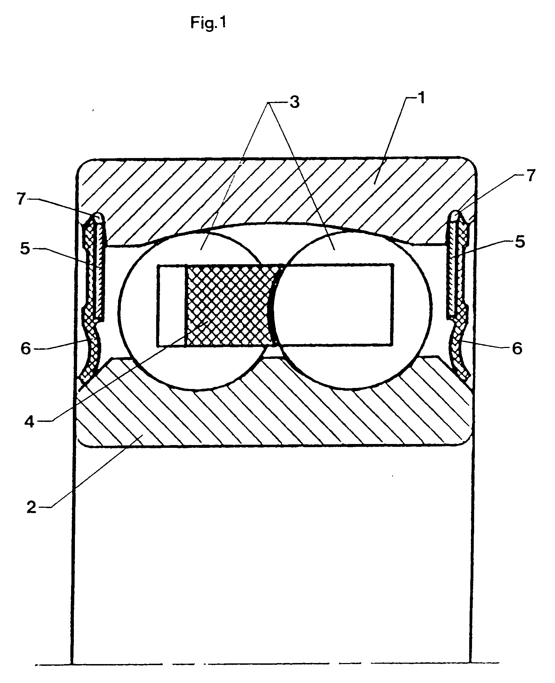

The sealed spherical bearing according to Fig. 1 comprises an outer ring 1, an inner ring 2, balls 3, a retainer 4 and seals 5 on each side of the balls 3. The seals 5, which consist of an inner sheet, on which is vulcanized rubber with a sealing lip 6, are pressed into grooves 7 in the outer ring. As is evident from the figure, the part of the bearing, which is outside the running paths, constitutes a very large part of the width of the bearing, about a fourth, which parts do not contribute to the load carrying capacity of the bearing. If therefore the sealings were not needed, a much narrower bearing could be used with the same load carrying capacity. On one hand one should be able to save material and on the other machining costs, which are large, especially what concerns the turning of the grooves 7.

According to the invention as is shown in the figures there has been provided a sealed bearing which has the same width as an unsealed bearing should have had and where no grooves for seals have to be made. It has been realized that normally beside the roller elements in unsealed bearings there is a small space for seals outside the bearing. These seals however are not allowed to come too far radially outwards on the outer ring and have to be fixed in this outer ring near the spherical inside thereof. The reason for this is that it should be possible to lock the outer ring with a step, washers or the like, which engages the side plane of the ring.

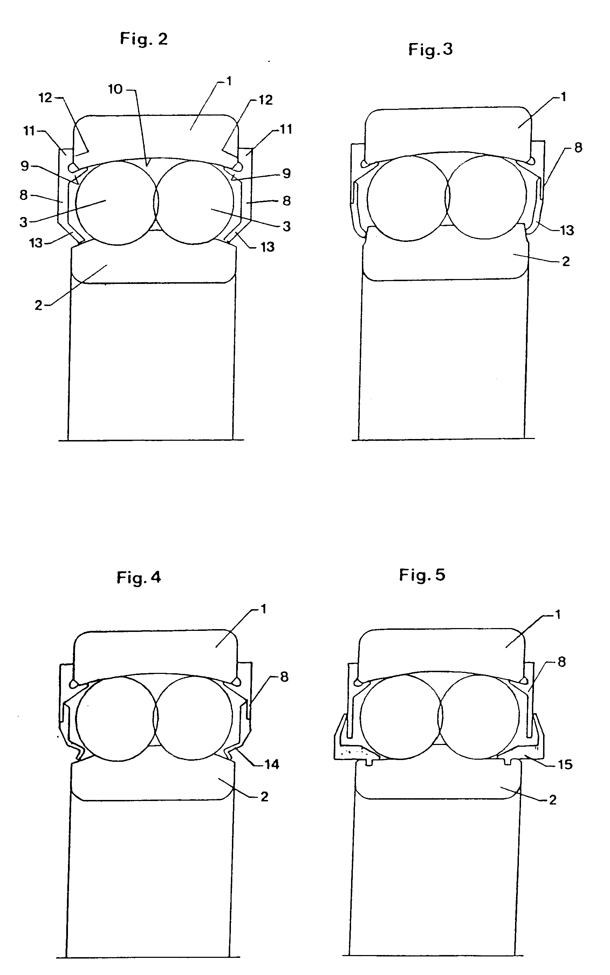

Therefore according to the invention there have been provided seals 8, which have been provided with a rim 9 with the inside thereof near the radially outer part of the seal, which rim 9 is snapped in against the spherical race track 10 of the bearing. In order to get the seal securely clamped, this seal at the outer part 11 is formed such that it presses against the side plane 12 of the outer ring. In this way the seal is kept in a secure grip. A condition that the mounting of the seal should be possible is that the rim 9 is somewhat elastic. It is therefore suitable if the whole outer part of the seal 8 or only the rim is made of an elastic material such as stiff rubber, plastic or metal sheet. A further advantage with the rim 9 is that it is clamped by the balls when the bearing is tilted, so that the seal 8 is not pressed out of the bearing. Otherwise such an incident may easily occur during the handling of the bearing before the assembly. The whole seal 8 can be made in one and the same material and it may, such as is shown in Fig. 2, have a radially inner part 13, which is bent inwards against the inner ring 2 and there forms a labyrinth seal against the inner ring.

Fig. 3 shows the same type of bearing as Fig. 2. The seal 8 in this case is made of two materials, namely plastic in the outer part and with an inner part 13 of rubber or similar soft material, which is formed as a sealing lip, which gives frictional contact with the inner ring 2.

Fig. 4 shows the same bearing and seal as Fig. 3 but with a differently designed inner sealing lip 14.

Fig. 5 shows a further embodiment of the invention applied on the same type of bearing as in the preceding figures. In this case a seal 8 is made in one piece, which extends only partly down towards the inner ring 2, on which a sealing lip is mounted, which makes contact against the outside of the seal 8.

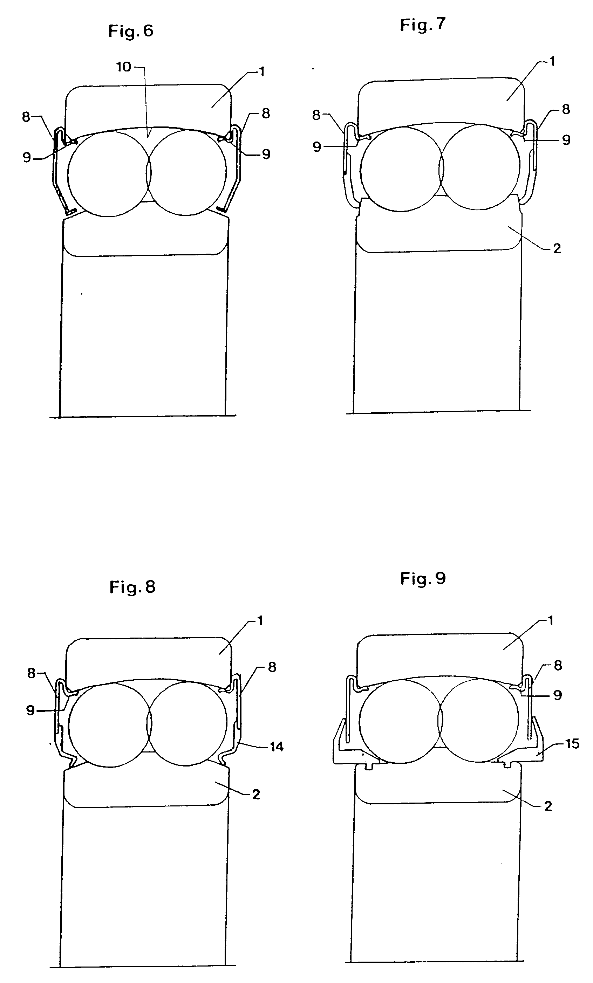

The Figures 6, 7, 8 and 9 show embodiments corresponding to the embodiments according to Fig. 2-5 respectively with the difference that the seal is made in sheet metal instead of plastic. The rim 9 which is intended to be snapped in against the running path 10 has been provided by bending of the sheet. As to the rest the seals according to these figures similar to those according to Fig. 2-5.

Through the present invention has been achieved a sealed spherical bearing which can be used with the same external dimensions as an unsealed spherical bearing. Thereby has been achieved a less expensive design, since a sealed bearing according to known designs had to be broader than those according to the invention and are more expensive in manufacture by the turning of a groove for mounting of the seal.

## Claims

1. Spherical rolling bearing comprising an outer ring (1) with a spherical race track (10), an inner ring (2) and roller elements (3) situated between the rings (1,2) and (a) seal(s) (8) on one or both sides
**characterized** **therein**,
that the seal(s) (8) are formed with a rim (9) which is snapped against the spherical race track (10) and kept in the outer ring (1) by means of this rim (9) and a portion (11) which clamps against the side plane (12) of the outer ring (1).

2. Spherical rolling bearing according to claim 1,
**characterized** **therein**,
that the seal (8) is made in one piece of plastic, rubber or sheet metal and at its radial inner rim (13) is bent inwards against the bearing and there forms a labyrinth seal against a surface on the inner ring (2).

3. Spherical rolling bearing according to claim 1,
**characterized** **therein**,
that the seal (8) consisting of plastic or sheet metal at its radial outer part at its inner portion (4) is provided with a lip (14) of rubber or similar soft material, which is intended to contact a surface on the inner ring (2).

4. Spherical rolling bearing according to claim 1,
**characterized** **therein**,
that the seal (8) extends only partly inwards towards the inner ring (2) and that a lip (15) mounted on the inner ring (2) of soft material contacts the outside of the seal (8).

## Patentansprüche

1. Pendelwälzlager mit einem Außenring (1) mit einer sphärischen Laufbahn (10), einem Innenring (2) und zwischen den Ringen (1, 2) angeordneten Wälzkörpern (3) sowie einer Dichtung (8) auf wenigstens einer Seite, **dadurch gekenn****zeichnet,** daß die Dichtung (8) mit einem gegen die sphärische Laufbahn (10) eingeschnappten Rand (9) ausgebildet und durch diesen sowie einen gegen die Seitenfläche (12) des Außenrings (1) angeklemmten Teil (11) in dem Außenring (1) gehalten ist.

2. Pendelwälzlager nach Anspruch 1, **dadurch gekennzeichnet,** daß die Dichtung (8) einstückig aus Kunststoff, Gummi oder Metallblech besteht und an ihrem radial inneren Rand (13) einwärts gegen das Lager gebogen ist und dort gegen die Oberfläche des Innenrings (2) eine Labyrinthdichtung bildet.

3. Pendelwälzlager nach Anspruch 1, **dadurch gekennzeichnet,** daß die Dichtung (8) in ihrem radial äußeren Bereich aus Kunststoff oder Metallblech besteht und im inneren Bereich (4) mit einer Lippe (14) aus Gummi oder einem ähnlichen weichen Material versehen ist, welches gegen die Oberfläche des Innenrings (2) anlegbar ist.

4. Pendelwälzlager nach Anspruch 1, **dadurch gekennzeichnet,** daß sich die Dichtung (8) nur teilweise nach einwärts zum Innenring (2) hin erstreckt und daß eine auf dem Innenring (2) montierte Lippe (14) aus weichem Material an der Außenseite der Dichtung (8) anliegt.

## Revendications

1. Roulement à rotules qui comprend une bague extérieure (1) avec un chemin de roulement sphérique (10), une bague intérieure (2) et des éléments de roulement (3) situés entre les bagues (2, 3) et un ou des joints d'étanchéité (8) placés sur un côté ou sur les deux,
caractérisé en ce que le ou les joints d'étanchéité (8) sont formés avec un rebord (9) qui est encliqueté contre le chemin de roulement sphérique (10) et sont maintenus dans la bague extérieure (1) au moyen dudit rebord (9) et d'une partie (11) qui serre contre la face latérale (12) de la bague extérieure (1).

2. Roulement à rotules selon la revendication 1, caractérisé en ce que le joint d'étanchéité (8) est fait d'une seule pièce de matière plastique, de caoutchouc ou de métal en feuille et est coudé vers l'intérieur au niveau de son bord radial intérieur (13) contre le palier et y forme un joint d'étanchéité en labyrinthe contre la surface de la bague intérieure (2).

3. Roulement à rotules selon la revendication 1, caractérisé en ce que le joint d'étanchéité (8), fait de matière plastique ou de métal en feuille au niveau de sa partie radiale extérieure, est muni au niveau de sa partie intérieure (4) d'une lèvre (14), en caoutchouc ou en un matériau tendre similaire, qui est destinée à venir en contact avec une surface de la bague intérieure (2).

4. Roulement à rotules selon la revendication 1, caractérisé en ce que le joint d'étanchéité (8) ne s'étend que partiellement vers l'intérieur en direction de la bague intérieure (2) et en ce qu'une lèvre (15) montée sur la bague intérieure (2) faite d'une matière tendre vient en contact avec l'extérieur du joint d'étanchéité (8).
